Europäisches Patentamt

European Patent Office

Office européen des brevets

(19)

(11) Veröffentlichungsnummer: **0 011 139**
**B1**

(12) # EUROPÄISCHE PATENTSCHRIFT

(45) Veröffentlichungstag der Patentschrift:
25.11.81

(21) Anmeldenummer: 79103943.1

(22) Anmeldetag: 12.10.79

(51) Int. Cl.³: **B 60 G 15/06**

(54) **Lasttragendes Federbein für Kraftfahrzeuge, insbesondere Vorderachsbein.**

(30) Priorität: 11.11.78 DE 2849100

(43) Veröffentlichungstag der Anmeldung:
28.05.80 Patentblatt 80/11

(45) Bekanntmachung des Hinweises auf die Patenterteilung:
25.11.81 Patentblatt 81/47

(84) Benannte Vertragsstaaten:
AT BE FR GB IT NL SE

(56) Entgegenhaltungen:
DE-C-1 625 418
DE-U-7 613 092
FR-A1-2 292 164
GB-A-1 093 327
GB-A-1 122 190
US-A-3 690 425
SIMRIT-Katalog Nr. 400, 1975,
C. FREUDENBERG, Weinheim,
»Werkstoffbeschreibungen«, Seiten 47, 48

(73) Patentinhaber: **Firma August Bilstein,
D-5828 Ennepetal-Altenvoerde (DE)**

(72) Erfinder: **de Baan, Johannes J., Peddenöderstrasse 2,
D-5828 Ennepetal 18 (DE)**
Erfinder: **Adrian, Adolf, Altenloherweg 17,
D-5828 Ennepetal 13 (DE)**

(74) Vertreter: **Sturies, Herbert, Dr. Ing. Dipl.-Phys. et al,
Brahmsstrasse 29, D-5600 Wuppertal (DE)**

## Lasttragendes Federbein für Kraftfahrzeuge, insbesondere Vorderachsbein

Die Erfindung bezieht sich auf ein lasttragendes Federbein für Kraftfahrzeuge, insbesondere Vorderachsbein, mit einem den Radachszapfen tragenden Außenrohr und einem darin axial verschieblich geführt untergebrachten Stoßdämpferzylinder, der über sein oben aus dem Außenrohr herausragendes Ende mit dem Fahrgestellrahmen zu verbinden ist und dessen nach unten austretende Kolbenstange mit dem Außenrohrboden unverschieblich verbunden ist, und wobei weiterhin zwischen dem Stoßdämpferzylinder und dem Außenrohr eine durch in bezug auf letzteres unverschieblich angeordnete obere und untere Führungsringe begrenzte sowie durch neben letzteren angeordnete Dichtringe abgeschlossene, mit einem Schmierfett gefüllte Ringkammer konstanten Volumens vorgesehen und der obere Dichtring oberhalb des oberen Führungsringes angeordnet ist.

Bekannte Kraftfahrzeug-Federbeine obiger Art (DE-C-1 625 418 und US-A-3 690 425) unterscheiden sich von anderen vorteilhaft dadurch, daß bei ihnen das in der Ringkammer konstanten Volumens untergebrachte öl- oder fettartige Schmiermittel durch die beim Fahrbetrieb auftretenden Relativbewegungen zwischen dem Dämpferzylinder und dem Außenrohr nicht durch entsprechende Pumpwirkung verdrängt werden kann, so daß die verschleißmindernde Schmierwirkung zwischen dem Stoßdämpferzylinder und den Führungsringen aufrechterhalten wird, wobei die Dichtringe für die notwendige Abdichtung der Schmiermittel-Ringkammer sorgen. Da die Führungsringe in konstantem Abstand voneinander befestigt sind, ist der Stoßdämpferzylinder im Außenrohr unabhängig von deren jeweiliger Relativposition gleichbleibend gut geführt. Die Führungs- und Dichtringe können dabei entweder wie im Falle der DE-PS 1 625 418 unmittelbar an der Innenwandung des Außenrohres oder aber wie im Falle der US-A-3 60 425 in einer in das Außenrohr einschiebbaren Patronenhülse angebracht sein, die den Stoßdämpferzylinder und dessen Kolbenstange umgibt, mit letzterer bodenseitig verbunden und oben über eine Schraubmutter mit dem Außenrohr verschraubt ist. Bei beiden bekannten Federbeinen-Bauarten sind die Dichtringe unmittelbar neben den Führungsringen unverschieblich angeordnet, wobei der untere Dichtring jeweils unter dem unteren Führungsring liegt. Dadurch ist aber, wie die Erfahrung gezeigt hat, noch keine zufriedenstellende Fettschmierung der Führungsringe zu erzielen, wobei die Untenanordnung des unteren Dichtringes auch eine entsprechende Verkürzung des zwischen den Führungsringen vorhandenen Führungsabstandes bedingt, wodurch die Hubbewegungen des Stoßdämpferzylinders wie auch dessen Seitenführungsstabilität noch entsprechend eingeschränkt werden. Weiterhin besteht bei den gattungsgemäßen bekannten Federbeinen der Nachteil, daß die oberen Führungs- und Dichtungsringe nicht hinreichend gegen verunreinigungen, wie insbesondere Staub, Sand, Wasser oder Straßensalz, geschützt sind, die sich auf dem jeweils oben aus dem Außenrohr herausragenden Stoßdämpferzylinder absetzen und dadurch in den Bereich des oberen Dicht- und Führungsringes gelangen können, wo sie zu erhöhtem Abrieb und Riefenbildung führen.

Der Erfindung liegt daher die Aufgabe zugrunde, ein lasttragendes Federbein für Kraftfahrzeuge, insbesondere Vorderachsbein zu schaffen, das eine noch bessere Schmierung zwischen dem Stoßdämpferzylinder und den Führungsringen bei zugleich guter Schmutzabweiserwirkung und noch verbesserter Führung des Stoßdämpferzylinders besitzt. Diese Aufgabe wird ausgehend von einem Federbein der eingangs erwähnten Gattung erfindungsgemäß dadurch gelöst, daß der untere Dichtring oberhalb des unteren Führungsringes liegt, beide Dichtringe mit axial begrenztem Bewegungsspiel angeordnet und als Filzringe ausgebildet sind, und daß oberhalb des oberen Filzringes ein zugleich dessen axiales Bewegungsspiel begrenzender, aus abriebfestem Kunststoff bestehender Schmutzabweiserring vorhanden ist. Durch die jeweils mit axial begrenztem Bewegungsspiel oberhalb der Führungsringe angeordneten Filzringe wird sichergestellt, daß sich in den durch die Atmungsbewegung der Filzringe zwischen ihnen und den Führungsringen bildenden kleinen Ringkammern ein ständiger Schmierfettvorrat halten kann, der die Führungsringe besser zu schmieren erlaubt. Das ist trotz des darüber gelegenen Filzringes auch bei dem unteren Führungsring noch ausreichend der Fall, der aber dadurch in weitestmöglichem Abstand vom oberen Führungsring angeordnet werden kann und demzufolge eine noch größere Hubweite und Führungsstabilität des Stoßdämpferzylinders ermöglicht. Zugleich wird durch den oberhalb des oberen Filzringes angeordneten Kunststoff-Schmutzabweiserring gewährleistet, daß von letzterem sämtliche, sich auf dem aus dem Außenrohr herausragenden oberen Teil des Stoßdämpferzylinders absetzende Verunreinigungen sicher abgestreift, mithin daran gehindert werden können, in den oberen Dichtungs- und Führungsring bzw. in die Schmierfett-Ringkammer zu gelangen.

Solche Schmutzabweiserringe sind bei Stoßdämpferzylindern grundsätzlich bekannt gewesen, wo sie aber — wie im Falle der GB-A-1 122 190 — am unten gelegenen Kolbenstangen-Austrittsende des Dämpferzylinders angeordnet sind und am Kolbenstangen-Umfang abstreifend anliegen. Als besonders vorteilhaft hat es sich erwiesen, wenn der Schmutzabweiserring aus einer flachen Ringscheibe aus glasfaserverstärktem Polytetrafluoräthylen besteht, die an ihrem am Stoßdämpferzylinder anliegenden Innenumfang in durch die FR-A1-2 292 164 an sich bekannter Weise zu einer um etwa 45° nach oben abgebogenen Dichtlippe verformt ist. Da letztere dadurch praktisch nur linienförmig am Stoßdämpferzylinder anliegt, ergibt sich eine gute Abstreifwirkung bei nur verhältnismäßig niedriger Gleitreibung. Weiterhin werden dadurch die an den Bewegungsumkehrstellen des Stoßdämpferzylinders hervorgerufenen Losbrechkräfte auf den Schmutzabweiserring so gering wie möglich gehalten. Letzterer ist darüber hinaus auch einfach und kostensparend herstellbar sowie von großer Lebensdauer.

Zur Begrenzung des axialen Bewegungsspiels des unteren, oberhalb des unteren Führungsringes angeordneten Filzringes dient ein entsprechend befestigter, in Bezug auf das Außenrohr unverschieblich angeordneter Stützring.

Die Führungs- und Dichtringe können, wie durch die DE-C-1 625 418 bekannt, unmittelbar an der Innenwandung des Außenrohres angebracht sein, wobei jedoch der Schmutzabweiserring auf dem oberen Stirnrand des Außenrohres aufliegt und hier in an sich bekannter Weise (GB-A-1 093 327) durch einen auf das Außenrohrende aufgepreßten oder aufgeschraubten Abdeckring gehalten ist. Hierdurch kommt man zu einer sehr einfachen Montage des oberen Filzringes und des darüber gelegenen Schmutzabweiserringes.

Es ist aber auch möglich, die beiden Führungsringe sowie den unteren Filzring und dessen Stützring, wie durch die US-A-3 690 425 an sich bekannt, in einer in das Außenrohr einschiebbaren Patronenhülse anzubringen, die den Stoßdämpferzylinder und deren Kolbenstange umgibt, mit letzterer bodenseitig verbunden und oben über eine Schraubmutter mit dem Außenrohr verschraubt ist, wobei der obere Filzring und der Schmutzabweiserring gemeinsam in einer an der Schraubmutter innen vorhandenen Aussparung untergebracht sind. In diesem Falle bilden also der Stoßdämpferzylinder, seine Kolbenstange und die Patronenhülse sowie deren den Schmutzabweiserring und den oberen Filzring enthaltende Schraubmutter eine leicht auswechselbare Stoßdämpfer-Patronenbaueinheit, die als solche in das Außenrohr bequem eingesetzt und damit verschraubt bzw. entsprechend leicht ausgebaut werden kann.

In der Zeichnung sind zwei Ausführungsbeispiele erfindungsgemäß beschaffener Kraftfahrzeug-Vorderachsbeine dargestellt, wobei

Fig. 1 in senkrechtem Längsschnitt ein Federbein mit unmittelbar im Außenrohr eingebautem Stoßdämpfer zeigt,

Fig. 2 und 3 jeweils vergrößerte Darstellungen der Stellen A bzw. B der Fig. 1 wiedergeben,

Fig. 4 in senkrechtem Längsschnitt ein Federbein mit auswechselbarer Dämpferpatronen-Baueinheit zeigt, und die

Fig. 5 und 6 jeweils vergrößerte Darstellungen der Bereiche C bzw. D der Fig. 4 wiedergeben.

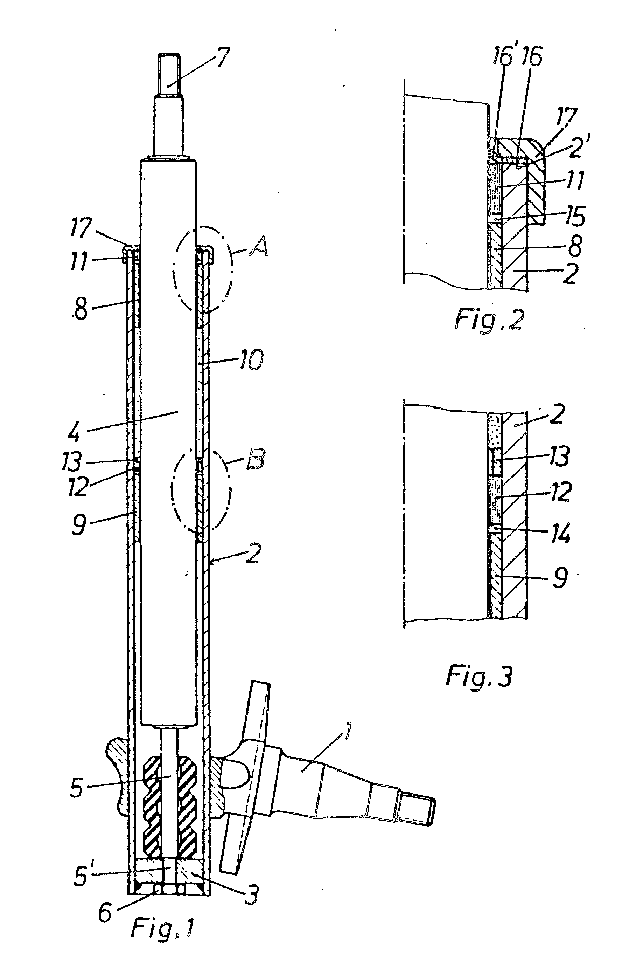

Das in Fig. 1 dargestellte Kraftfahrzeug-Vorderachsbein besitzt ein den Radachszapfen 1 tragendes Außenrohr 2, das an seinem unteren Ende durch den hier eingeschweißten Boden 3 verschlossen und regelmäßig noch mit einem nicht dargestellten Federteller versehen ist, über den es mittels einer die Fahrzeuglast teilweise tragenden Schraubendruckfeder gegenüber dem Fahrgestellrahmen des Kraftfahrzeuges federnd abgestützt ist. Im Außenrohr 2 ist der Stoßdämpferzylinder 4 eines vorzugsweise mit Druckgas und Dämpfungsflüssigkeit gefüllten hydropneumatischen Einrohrschwingungsdämpfers untergebracht, dessen den nicht dargestellten Arbeitskolben tragende Kolbenstange 5 nach unten abgedichtet aus dem Stoßdämpferzylinder 4 herausgeführt ist. An ihrem unteren Ende 5' ist die Kolbenstange im Außenrohr-Boden 3 befestigt, und zwar mittels der auf das im Durchmesser verjüngte, mit entsprechendem Außengewinde versehene Kolbenstangenende 5' aufgeschraubten Mutter 6. An seinem oberen, aus dem Außenrohr 2 herausragenden Ende trägt der Stoßdämpferzylinder 4 den Schraubbefestigungszapfen 7, über den der Stoßdämpferzylinder in bekannter Weise mit dem Fahrgestellrahmen des Kraftfahrzeuges zu verbinden ist.

An der Innenwandung des Außenrohres 2 sind in entsprechendem Abstand voneinander die beiden Führungsringe 8 und 9 befestigt, die zur Führung des Dämpferzylinders 4 im Außenrohr dienen und die dazwischen gelegene, mit einem geeigneten Schmierfett zu füllende Schmiermittel-Ringkammer 10 einschließen. Jeweils oberhalb der beiden Führungsringe 8, 9 sind mit axial begrenztem Bewegungsspiel Dichtringe 11, 12 angeordnet, die als Filzringe ausgebildet sind. Oberhalb des unteren Filzringes 12 ist ein Stützring 13 angeordnet, beispielsweise mit entsprechendem Klemm- oder Preßsitz an der Innenwandung des Außenrohres 2 befestigt. Dieser Stützring 13 begrenzt zusammen mit dem unteren Führungsring 9 das axiale Bewegungsspiel des Filzringes 12, der auf diese Weise, wie insbesondere Fig. 3 zeigt, zwischen sich und dem Führungsring 9 eine kleine Ringkammer 14 einschließt, in der sich ein entsprechender Fettvorrat ansammeln kann, der die Schmierung des unteren Führungsringes 9 verbessert.

Oberhalb des oberen Filzringes 11, der mit dem oberen Führungsring 8 eine entsprechende kleine Fettkammer 15 einschließt, ist der Schmutzabweiserring 16 in Form einer flachen Ringscheibe vorhanden, deren Innendurchmesser etwas kleiner als der Außendurchmesser des Stoßdämpferzylinders 4 gehalten ist. Zum Einbau wird diese Ringscheibe 16 über den Stoßdämpferzylinder 4 gestreift, bis sie auf dem oberen Stirnrand 2' des Außenrohres 2 flach aufliegt und durch den hier aufzupressenden oder aufzuschraubenden Abdeckring 17 gehalten wird. Bei dem vorgenannten Aufstreifen der Ringscheibe 16 über den Stoßdämpferzylinder 4 verformt sich der Innenumfang der Scheibe 16 zu einer um etwa 45° nach oben abgebogenen Dichtlippe 16', die dadurch mit einer schmalen Abstreifkante gleichsam nur linienförmig am Umfang des Stoßdämpferzylinders 4 anliegt und dadurch eine wirksame Abstreiferwirkung entfaltet, wobei nur geringe Gleitreibung auftritt und auch an den Bewegungsumkehrstellen des Stoßdämpferzylinders 4 hervorgerufenen, auf den Schmutzabweiserring 16 ausgeübten Losbrechkräfte nur äußerst gering sind. Der Schmutzabweiserring 16 stellt somit dauerhaft sicher, daß die sich auf dem oberen Teil des Stoßdämpferzylinders niederschlagenden Verunreinigungen, wie Staub, Wasser, Streusalzkörner u. dgl., nicht in den Bereich des Filzringes 11 oder des darunter gelegenen Führungsringes 8 gelangen können, mithin hier weder zu Verschleiß und Korrosion noch zu einem Auswaschen der Fettkammer 15 führen können. Auch die Gefahr von Schmierfett-Verkrustungen an diesen Stellen wird dadurch verhindert.

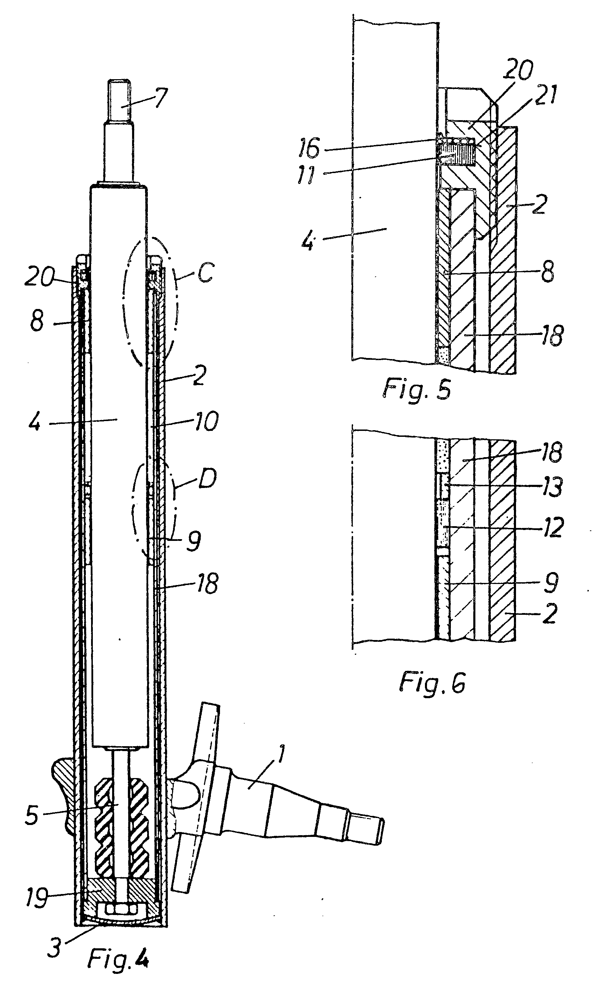

Bei der in den Fig. 4 bis 6 dargestellten Dämpferpatronen-Baueinheit sind die beiden Führungsringe 8, 9 sowie der untere Filzring 12 und sein Stützring 13 in einer in das Außenrohr 2 einschiebbaren Patronenhülse 18 angebracht, die in bekannter Weise den Stoßdämpferzylinder 4 und deren Kolbenstange 5 umgibt, mit letzterer bodenseitig über das Bodenstück 19 fest verbunden ist und oben über eine Schraubenmutter 20 mit dem Außenrohr 2 zu verschrauben ist. In diesem Falle sind der oberhalb des oberen Führungsringes 8 anzubringende Filzring 11 sowie der Schmutzabweiserring 16 gemeinsam in einer entsprechenden Aussparung 21 der Schraubenmutter 20 untergebracht. Hier bilden also der Stoßdämpferzylinder 4, die Kolbenstange 5, die Patronenhülse 18 und die Schraubenmutter 20 mit den eingebauten Führungs- und Filzringen sowie dem Schmutzabweiserring 16 eine in sich geschlossene auswechselbare Baueinheit, die als solche in das Außenrohr 2 soweit eingeschoben wird, daß dabei der Patronenboden 19 am Außenrohrboden 3 zur Anlage kommt und alsdann über die Schraubenmutter 20 die feste Verschraubung dieser Baueinheit im Außenrohr 2 bewirkt wird. Die oben in Verbindung mit dem Ausführungsbeispiel nach den Fig. 1 bis 3 erwähnten Vorteile sind auch bei dieser Dämpferpatronen-Ausführungsform voll gewahrt.

**Patentansprüche**

1. Lasttragendes Federbein für Kraftfahrzeuge, insbesondere Vorderachsbein, mit einem den Radachszapfen (1) tragenden Außenrohr (2) und einem darin axial verschieblich geführt untergebrachten Stoßdämpferzylinder (4), der über sein oben aus dem Außenrohr herausragendes Ende mit dem Fahrgestellrahmen zu verbinden ist und dessen nach unten austretende Kolbenstange (5) mit dem Außenrohrboden (3) unverschieblich verbunden ist, und wobei weiterhin zwischen dem Stoßdämpferzylinder und dem Außenrohr eine durch in Bezug auf letzteres unverschieblich angeordnete obere und untere Führungsringe (8, 9) begrenzte sowie durch neben letzteren angeordnete Dichtringe (11, 12) abgeschlossene, mit einem Schmierfett gefüllte Ringkammer (10) konstanten Volumens vorgesehen und der obere Dichtring (11) oberhalb des oberen Führungsringes (8) angeordnet ist, dadurch gekennzeichnet, daß der untere Dichtring (12) oberhalb des unteren Führungsringes (9) liegt, beide Dichtringe (11, 12) mit axial begrenztem Bewegungsspiel angeordnet und als Filzringe ausgebildet sind, und daß oberhalb des oberen Filzringes (11) ein zugleich dessen axiales Bewegungsspiel begrenzender, aus abriebfestem Kunststoff bestehender Schmutzabweiserring (16) vorhanden ist.

2. Federbein nach Anspruch 1, dadurch gekennzeichnet, daß der Schmutzabweiserring aus einer flachen Ringscheibe (16) aus glasfaserverstärktem Polytetrafluoräthylen besteht, die an ihrem am Stoßdämpferzylinder (4) anliegenden Innenumfang in an sich bekannter Weise zu einer um etwa 45° nach oben abgebogenen Dichtlippe (16') verformt ist.

3. Federbein nach Anspruch 1 oder 2, dadurch gekennzeichnet, daß oberhalb des unteren Filzringes (12) ein dessen axiales Bewegungsspiel begrenzender, in bezug auf das Außenrohr (2) unverschieblich angeordneter Stützring (13) vorgesehen ist.

4. Federbein nach den Ansprüchen 1 bis 3, mit unmittelbar an der Innenwandung des Außenrohres angebrachten Führungs- und Dichtringen, dadurch gekennzeichnet, daß der Schmutzabweiserring (16) auf dem oberen Stirnrand (2') des Außenrohres (2) aufliegt und hier in an sich bekannter Weise durch einen auf das Außenrohrende aufgepreßten oder aufgeschraubten Abdeckring (17) gehalten ist (Fig. 1 bis 3).

5. Federbein nach den Ansprüchen 1 bis 3, bei dem die Führungs- und Dichtringe in einer in das Außenrohr einschiebbaren Patronenhülse angebracht sind, die den Stoßdämpferzylinder und dessen Kolbenstange umgibt, mit letzterer bodenseitig verbunden und oben über eine Schraubmutter mit dem Außenrohr verschraubt ist, dadurch gekennzeichnet, daß der obere Filzring (11) und der Schmutzabweiserring (16) gemeinsam in einer an der Schraubmutter (20) innen vorhandenen Aussparung (21) untergebracht sind (Fig. 4 bis 6).

**Claims**

1. A load carrying shock absorber for motor vehicles, particularly a shock absorber for the forward axle, with an outer tube (2) carrying the kingpin (1) and with a shock absorber cylinder (4) guided in axially movable fashion inside the said tube, which cylinder is to be connected, by means of its end projecting at the upper portion from the said outer tube, to the chassis frame and whose downwards projecting piston rod (5) is connected in a stationary fashion to the bottom (3) of the outer tube, and in which between the shock absorber cylinder and the outer tube there is disposed an annular constant volume chamber (10) filled with grease, limited by upper and lower guide rings (8, 9) disposed stationary with respect to the outer tube, and closed by gasket rings (11, 12) adjacent the said guide rings, the upper gasket ring (11) being disposed above the upper guide ring (8), characterized in that the lower gasket ring (12) is disposed above the lower guide ring (9) and the two gasket rings (11, 12) are mounted with an axially limited clearance and are formed by felt rings, and that above the upper felt ring (11) there is provided a dirt guard ring (16) made of a wear-resistent synthetic material, which at the same time restricts the axial movement clearance of the upper felt ring.

2. A shock absorber as claimed in Claim 1, characterized in that the dirt guard ring is formed by a flat annular disk (16) made of polytetrafluoroethylene reinforced with glas fiber, which disk at its inner periphery adjacent the shock absorber cylinder (4) is deformed, in a way per se known, so as to form a sealing lip (16') bent about 45° upwards.

3. A shock absorber as claimed in Claim 1 or 2, characterized in that above the lower felt ring (12) there is provided a supporting ring (13) which is disposed stationary with respect to the outer tube (2) and limits the axial movement clearance of the said felt ring.

4. A shock absorber as claimed in Claims from 1 to 3, with guide rings and gasket rings disposed directly on the inner wall of the outer tube, characterized in that the dirt guard ring (16) rests on the upper front edge (2') of the outer tube (2) and is retained in place, in a manner per se known, by a cover ring (17) keyed or screwed onto the end of the outer tube (Figures from 1 to 3).

5. A shock absorber as claimed in Claims from 1 to 3, in which the guide rings and the gasket rings are disposed in a cartridge bushing insertable into the outer tube, which bushing surrounds the shock absorber cylinder and its piston rod, is connected to this latter in the region of the bottom and is screwed in the upper region on the said outer tube by means of a screw nut, characterized in that the upper felt ring (11) and the dirt guard ring (16) are disposed together in a cavity (21) provided inside the screw nut (20). (Figures from 4 to 6).

## Revendications

1. Amortisseur porteur de charge pour véhicules à moteur, particulièrement amortisseur pour l'essieu avant, avec un tube extérieur (2) supportant l'axe de fusée (1) et avec un cylindre d'amortisseur (4) guidé d'une façon déplaçable dans l'intérieur dudit tube, lequel cylindre doit être raccordé, par son extrémité faisant saille de ce tube extérieur dans la partie supérieure, au chassis et dont la tige de piston (5) est raccordée d'une façon stationnaire au fond (3) du tube extérieur, et dans lequel, entre le cylindre d'amortisseur et le tube extérieur, est disposée une chambre annulaire à volume constant (10) remplie de graisse, limitée par des anneaux-guide (8, 9) supérieurs et inférieurs disposés d'une façon stationnaire par rapport au tube extérieur, et fermée par des anneaux-joint (11, 12) adjacents auxdits anneaux-guide, l'anneau-joint supérieur (11) étant disposé au-dessus de l'anneau-guide supérieur (8), caractérisé en ce que l'anneau-joint inférieur (12) est disposé au-dessus de l'anneau-guide inférieur (9) et les deux anneaux-joint (11, 12) sont montés avec un jeu axialment limité et sont formés par des anneaux de feutre, et en ce que au-dessus de l'anneau de feutre supérieur (11) est disposé un anneau pare-poussière (16) d'un matériau synthétique antiusure, lequel en même temps réduit le jeu axial de mouvement de l'anneau de feutre supérieur.

2. Amortisseur selon la revendication 1, caractérisé en se que l'anneau pare-poussière est formè par un disque annulaire plat (16) de polytétrafluoroétylène renforcé par des fibres de verre, lequel disque, à sa périphérie intérieure adjacente au cylindre d'amortisseur (4), est déformé, d'une manière en soi-même connue, en formant une lèvre d'étanchéité (16') pliée d'environ 45° vers le haut.

3. Amortisseur selon la revendication 1 ou 2, caractérisé e, ce que au-dessus de l'anneau de feutre inférieur (12) est disposé un anneau de support (13) stationnaire par rapport au tube extérieur et qui limite le jeu axial de mouvement dudit anneau de feutre.

4. Amortisseur selon les revendications précedentes, avec anneaux-guide et anneaux-joint disposés directement sur la paroi intérieure du tube extérieur, caractérisé e, ce que l'anneau pare-poussière s'appuie sur l'arête frontale supérieure (2') du tube extérieur (2) et est maintenu en place, d'une façon en soi-même connue, par un anneau de couverture (17) embrevé ou vissé sur l'extrémité du tube extérieur (figures 1 à 3).

5. Amortisseur selon les revendications 1 à 3, dans lequel les anneaux-guide et les anneaux-joint sont logés dans une douille à cartouche insérable dans le tube extérieur, laquelle douille entoure le cylindre d'amortisseur et sa tige de piston, est raccordée à cette dernière dans la zone du fond et est vissée, dans la partie supèrieure, sur ledit tube extérieur au moyen d'un écrou, caractérisé en ce que l'anneau de feutre supérieur (11) et l'anneau pare-poussière (16) sont logés ensemble dans une cavité (21) disposée à l'intérieur de l'écrou (20). (figures 4 à 6).

Fig. 1

Fig. 2

Fig. 3

Fig. 4

Fig. 5

Fig. 6